# EUROPÄISCHE PATENTSCHRIFT

(11) **EP 4 008 169 B1**
(45) Veröffentlichungstag und Bekanntmachung des Hinweises auf die Patenterteilung: **22.10.2025**
(21) Anmeldenummer: 21401049.8
(22) Anmeldetag: 29.11.2021
(51) Int. Cl.: A01C 7/04

(54) **LANDWIRTSCHAFTLICHE VEREINZELUNGSVORRICHTUNG ZUR VEREINZELUNG VON KÖRNIGEM MATERIAL**
AGRICULTURAL SEPARATING DEVICE FOR SEPARATING GRANULAR MATERIAL
DISPOSITIF AGRICOLE DE SÉPARATION DESTINÉ AU SÉPARATION DE LA MATIÈRE GRANULAIRE

(30) Priorität: 02.12.2020 DE 102020131964
(43) Veröffentlichungstag der Anmeldung: 08.06.2022
(73) Patentinhaber: Amazonen-Werke H. Dreyer SE & Co. KG, 49205 Hasbergen (DE)
(72) Erfinder: Bulmahn, Simon, 26655 Westerstede (DE)

(56) Entgegenhaltungen:
- EP-A1- 3 735 813
- EP-B1- 3 235 360
- US-B1- 9 338 939

## Beschreibung

Die Erfindung betrifft eine landwirtschaftliche Vereinzelungsvorrichtung zur Vereinzelung von körnigem Material gemäß dem Oberbegriff des Patentanspruches 1 und eine landwirtschaftliche Sämaschine gemäß dem Oberbegriff des Patentanspruches 8.

Innerhalb der Landwirtschaft sind eine Vielzahl von gezogenen und/oder auf- bzw. angebauten Arbeitsgeräten bekannt. Zu derartigen Arbeitsgeräten zählen unter anderem landwirtschaftliche Sämaschinen, die zur Abgabe von körnigem Material, insbesondere Saatgut- und/oder Dünger, auf einer landwirtschaftlichen Nutzfläche dienen. Derartige Sämaschinen umfassen hierzu neben zumindest einem zum Vorhalten des körnigen Materials geeigneten Vorratsbehälter, zumindest eine, insbesondere pneumatische, Fördereinrichtung zum Zubringen des körnigen Materials zu zumindest einer an der Sämaschine angeordneten Vereinzelungsvorrichtung. Bei anderen Ausführungsformen ist das körnige Material alternativ oder zusätzlich mittels Schwerkraft aus dem Vorratsbehälter der Vereinzelungsvorrichtung zubringbar. Die Vereinzelungsvorrichtung ist dabei dazu eingerichtet, das zubringbare körnige Material zumindest teilweise zu vereinzeln und je nach Art des körnigen Materials, insbesondere Saatguts und/oder Düngers, bedarfsgerecht in Richtung der landwirtschaftlichen Nutzfläche auszugeben.

Das körnige Material ist dabei je nach Art bzw. Sorte mit unterschiedlichen Aussaatstärken bzw. Abstände zueinander entlang der Nutzfläche auszugeben. Um diesem Bedarf mit gattungsgemäßen Vereinzelungsvorrichtungen gerecht zu werden, sind aus dem Stand der Technik verschiedene Lösungsansätze bekannt.

So sind beispielsweise wie in der EP 3 266 295 A1 beschriebene Vereinzelungsvorrichtungen bekannt, die zumindest teilweise umrüstbar und auf die jeweilige Art bzw. Sorte des körnigen Materials anpassbar sind. Die Vereinzelungsvorrichtung weist dabei zumindest ein Gehäuse zur Bereitstellung des körnigen Materials auf. Außerdem umfasst die Vereinzelungsvorrichtung zumindest ein innerhalb des Gehäuses rotatorisch antreibbares, insbesondere zumindest teilweise rotationssymmetrisch ausgebildetes, Vereinzelungselement mit mehreren in regelmäßigen Abständen zueinander angeordneten und zur Mitnahme wenigstens eines Korns des körnigen Materials geeigneten, insbesondere durchgangslochartigen, Kornaufnahmeausnehmungen. Des Weiteren ist innerhalb des Gehäuses zumindest ein von dem Vereinzelungselement zumindest teilweise antreibbares Auswurforgan angeordnet. Das Auswurforgan weist dabei mehrere, insbesondere am Umfang verteilte, Auswerfelemente zur Reinigung verstopfter und/oder verschmutzter Kornaufnahmeausnehmungen auf, wobei die Auswerfelemente dazu eingerichtet sind, zumindest teilweise in die Kornaufnahmeausnehmungen einzugreifen.

Nachteilig an derartigen Vereinzelungsvorrichtungen ist unter anderem jedoch die besonders aufwändige Anpassung auf die jeweilige Sorte des körnigen Materials und der damit einhergehenden Aussaatstärke. Beispielsweise erfordert dies jeweils unterschiedliche Vereinzelungselemente mit zueinander abweichenden Abständen der Kornaufnahmeausnehmungen und jeweils dazu korrespondierenden Auswurforganen, insbesondere Auswerfelementen. Somit ist bei einem Wechsel des körnigen Materials zum einen das jeweilige Vereinzelungselement als auch das dazu zugeordnete Auswurforgan auszutauschen und/oder anzupassen.

Darüber hinaus werden typischerweise aufgrund von Bauraumbeschränkungen Auswurforgane mit verhältnismäßig kleinen Abmessungen eingesetzt, aus denen wiederrum Auswerfelemente mit besonders kleiner Teilung und/oder hoher Anzahl am Auswurforgan resultieren. Dies wiederrum erfordert auf der anderen Seite eine hohe Anzahl an Kornaufnahmeausnehmungen und/oder geringe Abstände der Kornaufnahmeausnehmungen zueinander in die die Auswerfelemente für einen optimalen Antrieb zumindest teilweise eingreifen. Somit sind derartig ausgebildeten Vereinzelungsvorrichtungen zumindest im Wesentlichen auf Sorten von körnigem Material beschränkt, die eine hohe Aussaatstärke bzw. geringe Abstände des ausgebrachten körnigen Materials auf der landwirtschaftlichen Nutzfläche zueinander erlauben. Eine Ausbringung von Sorten des körnigen Materials mit geringer Aussaatstärke, wie beispielsweise Bruchkorn, ist mit derartigen Vereinzelungsvorrichtungen, insbesondere Auswurforgangen, besonders eingeschränkt oder gar nicht möglich.

Ferner sind im Stand der Technik Lösungen bekannt die zumindest ein zusätzliches Antriebsorgan zum Antrieb des Auswurforgans umfassen. Eine derartige Vereinzelungsvorrichtung ist beispielsweise in der EP 3 235 360 B1 beschrieben. Das Antriebsorgan ist dabei von dem Vereinzelungselement rotatorisch antreibbar ausgebildet. Hierzu weist das Antriebsorgan mehrere am Umfang verteilte Antriebselemente auf die zumindest teilweise in an dem Vereinzelungselement ausgebildeten und dazu korrespondierenden Antriebsöffnungen eingreifen. Das Antriebsorgan ist des Weiteren drehfest mit dem Auswurforgan gekoppelt und somit dazu eingerichtet, die vom Vereinzelungselement eingeleitete Drehbewegung auf das Auswurforgan zu übertragen.

Der beschriebene Lösungsansatz hat jedoch den Nachteil, dass hierbei zumindest eine weitere Komponente zum Antreiben des Auswurforgans erforderlich ist. Darüber hinaus ist eine derartig ausgebildete Vereinzelungsvorrichtung aufgrund der am Vereinzelungselement ausgebildeten, insbesondere zu den Kornaufnahmeausnehmungen benachbarten, zusätzlichen Antriebsöffnungen besonders komplex und damit besonders kosten- und/oder fertigungsaufwendig gestaltet.

Die der Erfindung zugrunde liegende Aufgabe besteht somit darin, eine Vereinzelungsvorrichtung so zu gestalten, dass die beschriebenen Nachteile aus dem Stand der Technik zumindest teilweise behoben sind. Insbesondere soll die Vereinzelungsvorrichtung auf das jeweilige körnige Material einfach und/oder mit reduziertem apparativen Aufwand anpassbar sein.

Diese Aufgabe wird erfindungsgemäß durch die Merkmale des Anspruch 1 gelöst.

Infolge der erfindungsgemäßen Maßnahme ist das Auswurforgan sowohl durch den Eingriff der Auswerfelemente in die Kornaufnahmeausnehmungen als auch den Eingriff der Auswerfelemente in die wenigstens eine Antriebssenke antreibbar. Die Drehbewegung des Vereinzelungselements ist somit zumindest teilweise von den Kornaufnahmeausnehmungen und der wenigstens einen Antriebssenke auf das Auswurforgan übertragbar. Bevorzugt sind in Abhängigkeit der auszubringenden Sorte des körnigen Materials und der damit zusammenhängenden Aussaatstärke mehr oder weniger Antriebssenken zwischen jeweils zwei Kornaufnahmeausnehmungen angeordnet. Bei besonders großen Aussaatstärken sind außerhalb des Anwendungsbereichs der Erfindung Vereinzelungselemente ohne Antriebssenken verwendbar. Die Erfindung bietet den entscheidenden Vorteil, dass das Auswurforgan so besonders flexibel und für unterschiedliche Sorten von körnigem Material, insbesondere Aussaatstärken, einsetzbar ist. Hierdurch ist der Wechsel des körnigem Material und/oder der Aussaatstärke mit einem besonders geringem Montageaufwand erreichbar.

Weiterhin sind auch Vereinzelungselemente mit besonders großen Abständen zwischen jeweils zwei Kornaufnahmeausnehmungen und damit besonders kleine Aussaatstärken erreichbar. Die erfindungsgemäße Vereinzelungsvorrichtung ist somit auch für Sorten mit besonders kleinen Aussaatstärken, wie beispielsweise Bruchkorn, mit Auswurforgan verwendbar. Fehlstellen und/oder Fehlausbringungen sind somit auch bei besonders kleinem körnigen Material und/oder besonders kleinen Aussaatstärken mit der erfindungsgemäßen Vereinzelungsvorrichtung zumindest nahezu ausgeschlossen. Darüber hinaus ist hierdurch erreicht, dass ein manueller Reinigungsaufwand, insbesondere aufgrund von verstopften Kornaufnahmeausnehmungen, durch einen Bediener nicht mehr erforderlich ist oder zumindest teilweise reduziert ist.

Unter dem Auswerfelement ist erfindungsgemäß ein sich vom Auswurforgan, insbesondere zumindest im Wesentlichen in axialer Richtung zur Drehachse des Vereinzelungselements, erstreckender Körper zu verstehen, der dazu eingerichtet ist, körniges Material und/oder Verschmutzungen, vorzugsweise durch mechanisches herausdrücken, zumindest teilweise aus den Kornaufnahmeausnehmungen zu lösen. Ein Auswerfelement ist dabei bevorzugt zumindest teilweise nach Art eines, vorzugsweise sich verjüngenden, Dorns oder Stiftelements ausgebildet. Alternativ oder zusätzlich sind hierbei jedoch auch Auswerfelemente vorstellbar, die zumindest teilweise flexibel und/oder elastisch, beispielsweise nach Art von Bürsten, ausgebildet sind. Weiterhin ist alternativ oder zusätzlich auch ein Auswurforgan denkbar das der Art elastisch, beispielsweise in Form von Gummi- oder Kunststoff, ausgebildet ist, dass sich das jeweilige Vereinzelungselement am Auswurforgan erst durch das hineindrücken in die Kornaufnahmeausnehmung und/oder Antriebssenke bildet.

Des Weiteren ist ein Auswurforgan bevorzugt das zumindest teilweise rollen-, kegel- und/oder zylinderförmig ausgebildet ist, wobei die Auswerfelemente am Umfang des Auswurforgans angeordnet sind. Ein rotationssymmetrisches Auswurforgan ist dabei besonders bevorzugt.

In einer bevorzugten Ausführungsform der erfindungsgemäßen Vereinzelungsvorrichtung entspricht der Abstand der wenigstens einen Antriebssenke zu wenigstens einer weiteren Antriebssenke und/oder wenigstens einer Kornaufnahmeausnehmungen zumindest nahezu einer Teilung der Auswerfelemente des zumindest einen Auswurforgans. Die Antriebssenken und Kornaufnahmeausnehmungen weisen hierbei regelmäßige und/oder gleichmäßige Abstände zueinander auf. Das Auswurforgan ist durch die jeweiligen Auswerfelemente dazu eingerichtet, während einer Drehbewegung des Vereinzelungselements alternierend und nacheinander mit den Auswerfelementen in die jeweiligen Antriebssenken und Kornaufnahmeausnehmungen einzugreifen. Hierbei sind die Abstände der zumindest einen Antriebssenke zu zumindest einer weiteren Antriebssenke und/oder zumindest einer Kornaufnahmeausnehmung korrespondierend zu der Teilung der Auswerfelemente entlang des Auswurforgans ausgebildet. Durch diese Ausführungsform ist ein besonders gleichmäßiger und damit zumindest nahezu vibrationsfreier Antrieb des Auswurforgans erreicht.

Unter der Teilung ist erfindungsgemäß der abgerollte Abstand von zumindest zwei Auswerfelementen zueinander entlang einer Ebene und/oder Geraden zu verstehen. Insbesondere bildet dieser eine Kreisteilung entlang eines Umfangs des Auswurforgans.

In einer Weiterbildung der erfindungsgemäßen Vereinzelungsvorrichtung ist das wenigstens eine Vereinzelungselement zumindest teilweise als kreisförmige Scheibe ausgebildet, wobei die Kornaufnahmeausnehmungen und die zumindest eine Antriebssenke zumindest im Bereich eines äußeren Scheibenumfangs angeordnet sind. Die Kornaufnahmeausnehmungen und die Antriebssenken sind dabei bevorzugt in einem Abstand zum äußeren Umfang, insbesondere in Richtung der Drehachse, des Vereinzelungselements angeordnet. Alternativ oder zusätzlich ist denkbar, dass die Kornaufnahmeausnehmungen und die Antriebssenken auf und/oder entlang, insbesondere der Außenseite, des Umfangs des Vereinzelungselements angeordnet sind. Die Kornaufnahmeausnehmungen und die Antriebssenken sind des Weiteren erfindungsgemäß zumindest teilweise konzentrisch entlang eines gemeinsamen Durchmessers bzw. Radius zu einer Drehachse des Vereinzelungselements angeordnet. Diese Ausführungsform weist somit einen besonders geringen Fertigungsaufwand der Vereinzelungsvorrichtung, insbesondere des Vereinzelungselements, auf.

Alternativ hierzu sind auch zumindest teilweise trommelartig ausgebildete Vereinzelungselemente denkbar, wobei die Kornaufnahmeausnehmungen und die Antriebssenken dabei bevorzugt auf der Außenseite des Vereinzelungselements angeordnet sind.

In einer anderen bevorzugten Ausführungsform der erfindungsgemäßen Vereinzelungsvorrichtung entsprechen die Abmessungen der zumindest einen Antriebssenke zumindest im Wesentlichen den Abmessungen der Kornaufnahmeausnehmungen. Die Kornaufnahmeausnehmungen und die Antriebssenken sind dabei vorzugsweise zumindest abschnittsweise kreisförmig ausgebildet, wobei die Durchmesser der kreisförmigen Abschnitte der jeweiligen Kornaufnahmeausnehmungen und Antriebssenken zumindest nahezu zueinander gleich sind. Alternativ oder zusätzlich hierzu sind auch eckige oder polygonförmige Abschnitte entlang der Kornaufnahmeausnehmungen und/oder Antriebssenken denkbar. Durch diese Ausführungsform sind das Vereinzelungselement und damit die Vereinzelungsvorrichtung mit noch weiter verringertem Fertigungsaufwand herstellbar. Darüber hinaus sind dadurch der Antrieb des Auswurforgans und/oder die Übertragung der Drehbewegung noch gleichmäßiger in das Auswurforgan übertragbar.

In einer alternativen erfindungsgemäßen Ausführungsform ist die zumindest eine Antriebssenke nach Art einer Stufe und/oder Kante am Vereinzelungselement ausgebildet oder angeordnet.

Darüber hinaus ist eine erfindungsgemäße Vereinzelungsvorrichtung bevorzugt bei der das Gehäuse mittels des zumindest einen Vereinzelungselements in wenigstens einen ersten Bereich und einen zweiten Bereich derartig unterteilt ist, dass zwischen dem wenigstens einen ersten und zweiten Bereich eine Druckdifferenz erzeugbar ist. Die Kornaufnahmeausnehmungen sind durchgangslochartig ausgebildet, sodass der wenigstens eine erste Bereich und zweite Bereich über die Kornaufnahmeausnehmungen räumlich miteinander verbunden sind. Die einzelnen Körner sind dabei aufgrund der Druckdifferenz zumindest teilweise innerhalb der Kornaufnahmeausnehmung mitnehmbar. Vorzugsweise ist in einer Rotationsrichtung des Vereinzelungselements vor dem Auswerfelement zumindest ein Abdeckelement angeordnet, welches dazu eingerichtet ist, die Druckdifferenz, insbesondere lokal im Bereich des zumindest einen Abdeckelements, durch zumindest teilweises Abdecken wenigstens einer Kornaufnahmeausnehmung temporär zu unterbinden und das wenigstens eine Korn aus der wenigstens einen Kornaufnahmeausnehmung zum Ablösen freizugeben.

In einer anderen alternativen erfindungsgemäßen Ausführungsform ist die zumindest eine Antriebssenke als Sackloch ausgebildet. Das Vereinzelungselement ist somit durch die Antriebssenken nicht durchbrochen. Ein in die Antriebssenke eingreifender Teil bzw. Abschnitt des Auswerfelements ist somit bevorzugt während des Eingriffs zumindest nahezu vollständig von der Antriebssenke umschlossen. Das Eingreifen der Auswerfelemente in die Antriebssenken ist somit besonders betriebssicher ausgebildet. Darüber hinaus bieten derartig ausgebildete Antriebssenken bei einer bevorzugten Ausführungsform, bei der die Kornaufnahmeausnehmungen nach Art von Durchgangslöchern ausgebildet und zum Mitnehmen von Körnern aufgrund von Druckdifferenzen eingerichtet sind, eine besonders geringe oder zumindest nahezu keine Beeinflussung der Druckdifferenz.

Eine alternativ als Sackloch ausgebildete Antriebssenke hat ferner den Vorteil, dass die zumindest eine Antriebssenke bei Bedarf durchbrochen und/oder durchgebohrt werden kann und somit besonders einfach zu einer Kornaufnahmeausnehmung anpassbar ist. Die Antriebssenke weist dabei vorzugsweise zumindest teilweise oder zumindest nahezu vollständig die gleichen Abmessungen wie die Kornaufnahmeausnehmungen auf, wobei die Antriebssenke zumindest auf einer Seite des Vereinzelungselements geschlossen ist. Bei einer derartigen Ausführungsform ist ein Vereinzelungselement durch eine besonders einfache Anpassung auch für unterschiedliche Aussaatstärken verwendbar. Darüber hinaus kann zumindest eine Antriebssenke alternativ mit besonders kleinem und/oder im Verhältnis zur Kornaufnahmeausnehmung einem kleineren Durchgangsloch ausgebildet sein.

In einer weiteren bevorzugten Ausführungsform der erfindungsgemäßen Vereinzelungsvorrichtung ist die Tiefe der Antriebssenke korrespondierend zu der Länge eines eingreifenden Teils des Auswerfelements oder diese zumindest im Wesentlichen übersteigend ausgebildet. Die, insbesondere maximale, Tiefe der Antriebssenke ist bevorzugt derart gewählt, das sie den in das Vereinzelungselement eingreifenden Teil des Auswerfelements übersteigt. Somit ist das Auswurforgan zumindest nahezu ohne Kontakt zum Boden der Antriebssenke übertragbar. Eine vom Vereinzelungselement auf das Auswurforgan resultierende Kraft ist somit zumindest nahezu tangential zur Drehachse und/oder korrespondierend zur Drehrichtung des Auswurforgans übertragbar. Insbesondere vom Vereinzelungselement ausgehende und in radialer Richtung zur Drehachse des Auswurforgans gerichtete Kraftübertragungen, insbesondere Stöße, sind somit zumindest nahezu ausgeschlossen, womit beispielsweise Höhenschläge des Auswurforgans zumindest im Wesentlichen vermieden werden. Durch diese Ausführungsform ist ein zumindest nahezu vibrationsfreier Antrieb des Auswurforgans erreicht.

In einer weiteren Weiterbildung der erfindungsgemäßen Vereinzelungsvorrichtung ist die zumindest eine Antriebssenke zumindest teilweise kegelförmig, vorzugsweise kegelstumpfförmig, ausgebildet. Die zumindest eine Antriebssenke erstreckt sich dabei ausgehend von einer Rückseite des Vereinzelungselements in Richtung einer Vorderseite des Vereinzelungselements, vorzugsweise korrespondierend zur Drehachse des Vereinzelungselements. Besonders bevorzugt ist die Antriebssenke sich verjüngend in eine vom Auswurforgan abweisenden Richtung ausgebildet. Diese Ausführungsform ermöglicht durch die größeren Abmessungen an der, insbesondere dem Auswurforgan zugewandten, Rückseite ein besonders einfaches in Eingriff bringen des Auswerfelements in die Antriebssenke. Somit sind insbesondere Toleranzen oder "Spiel" zwischen dem Auswurforgan und dem Vereinzelungselement besonders einfach ausgleichbar. Der Antrieb des Auswurforgans, insbesondere die Kraft zwischen dem Auswerfelement und Antriebssenke, ist hierbei durch einen unteren, vorzugsweise verjüngten, Bereich der Antriebssenke übertragbar. Darüber hinaus ist infolge der zumindest abschnittsweisen Kegelform der Antriebssenke eine Anlagerung und/oder Anhaftung von Verschmutzungen und/oder körnigem Material im Bereich der Antriebssenken zumindest nahezu ausgeschlossen. Ferner ist somit außerdem eine besonders gute Selbstreinigung der Antriebssenke erreicht.

Besonders bevorzugt sind die Antriebssenken auf der Vorderseite des Vereinzelungselements zumindest teilweise hervorstehend ausgebildet. Somit sind eine besonders gute Rührwirkung des körnigen Materials, welches auf der Vorderseite des Vereinzelungselements bereitgestellt wird, und damit eine verbesserte Mitnahme der einzelnen Körner erreicht.

Die der Erfindung zugrunde liegende Aufgabe wird ebenso innerhalb einer landwirtschaftlichen Sämaschine mit zumindest einer Vereinzelungsvorrichtung, vorzugsweise mehreren Vereinzelungsvorrichtungen, zum Vereinzeln von körnigem Material, insbesondere Saatgut und/oder Dünger gelöst, wobei die Vereinzelungsvorrichtung nach zumindest einer der vorgenannten Ausführungsformen ausgebildet ist. Hinsichtlich der Vorteile und Modifikationen der erfindungsgemäßen landwirtschaftlichen Sämaschine wird zunächst auf die Vorteile und Modifikationen der erfindungsgemäßen Vereinzelungsvorrichtung verwiesen.

Weitere Einzelheiten der Erfindung sind der Beispielsbeschreibung und den Zeichnungen zu entnehmen. Die Zeichnungen zeigen
- Fig.1: eine Säaggregat einer landwirtschaftlichen Sämaschine in Explosionsansicht von schräg vorn;
- Fig.2a: eine geöffnete Vereinzelungsvorrichtung mit einem Vereinzelungselement in perspektivischer Ansicht von schräg hinten in einem anderen Maßstab;
- Fig.2b: das Vereinzelungselement aus Fig.2a im perspektivischen Schnitt XI und in einem anderen Maßstab; und
- Fig.3: ein Auswurforgan in ausschnittsweise Darstellung gemäß Fig.2a im perspektivischen Schnitt XII und in vergrößerter Ansicht.

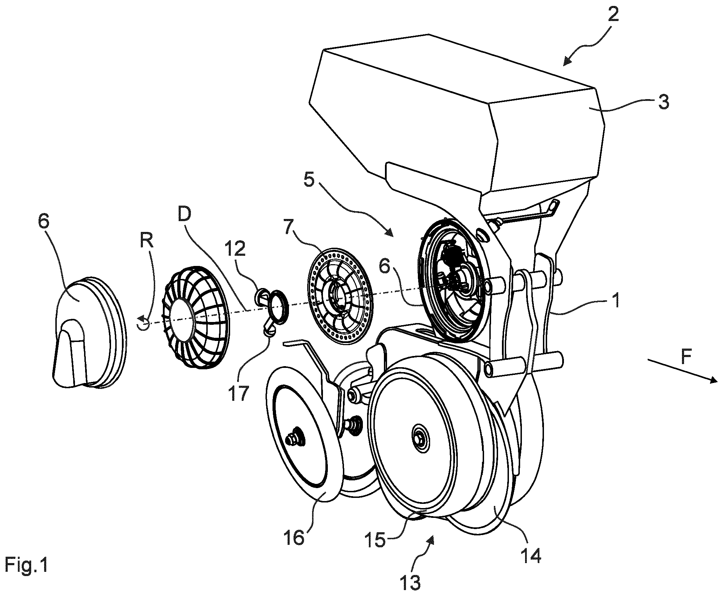

Eine landwirtschaftliche Sämaschine, insbesondere Einzelkornsämaschine, weist typischerweise einen horizontal quer zur Fahrtrichtung F ausgerichteten Rahmen auf. Mittels Tragelementen 1 sind an dem nicht dargestellten Rahmen mehrere Säaggregate 2 befestigt, wie sie Fig. 1 zeigt.

Ein Säaggregat 2 weist einen Vorratsbehälter 3 zur Bevorratung von auszubringendem körnigen Material G, insbesondere Saatgut und/oder Dünger, auf. Der untere Bereich des Vorratsbehälters 3 ist als Auslaufbereich ausgestaltet, in welchem eine Auslauföffnung 4 angeordnet ist. Über die Auslauföffnung 4 wird das auszubringende körnige Material G einer Vereinzelungsvorrichtung 5 zugebracht, welche unterhalb des Vorratsbehälters 3 angeordnet ist.

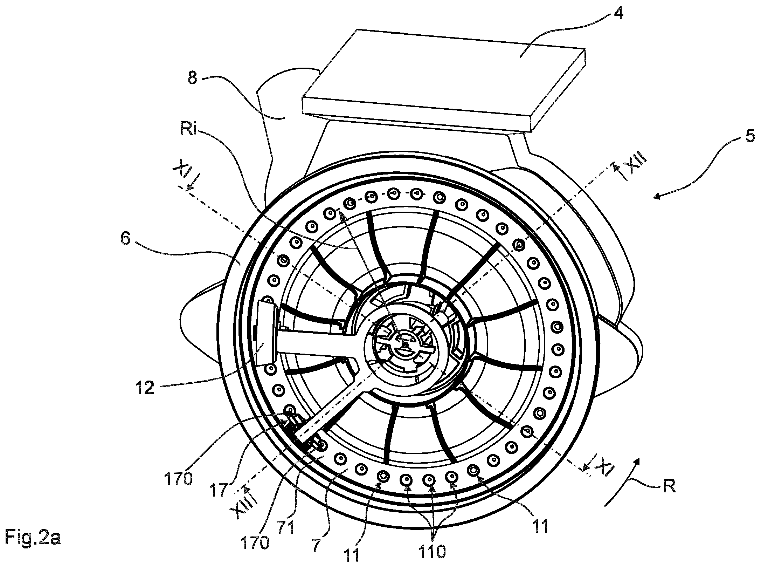

Die Vereinzelungsvorrichtung 5, gezeigt in Fig. 2a, umfasst ein Gehäuse 6 zur Bereitstellung des zugebrachten körnigen Materials G. Innerhalb des Gehäuses 6 ist ein um eine Drehachse D rotatorisch antreibbares, insbesondere zumindest teilweise rotationssymmetrisch ausgebildetes, Vereinzelungselement 7 angeordnet. Das Vereinzelungselement 7 ist hierbei zumindest teilweise als kreisförmige Scheibe ausgebildet und dazu eingerichtet, das im Gehäuse 6 bereitstellbare körnige Material G zumindest teilweise zu vereinzeln. Alternativ zur dargestellten Ausführungsform kann das Vereinzelungselement 7 auch zumindest teilweise trommel- oder zylinderartig ausgebildet sein.

Die dargestellte Vereinzelungsvorrichtung 5 ist hierbei ferner als Überdruckvereinzelung ausgeführt, wobei alternativ auch eine Unterdruckvereinzelung oder andere Art von Vereinzelung denkbar ist. Das Gehäuse 6 ist hierbei mittels des zumindest einen Vereinzelungselements 7 in wenigstens einen ersten Bereich und einen zweiten Bereich unterteilt. Mittels eines nicht gezeigten Gebläses, das über eine Druckluftleitung 8 fluidleitend mit dem Gehäuse 6 gekoppelt ist, ist der Vereinzelungsvorrichtung 5, insbesondere dem Gehäuse 6, Luft zuführbar. Die Unterteilung des Gehäuses 6 ist über das Vereinzelungselement 7 derart ausgeführt, dass somit zwischen dem wenigstens einen ersten und zweiten Bereich eine Druckdifferenz erzeugbar ist.

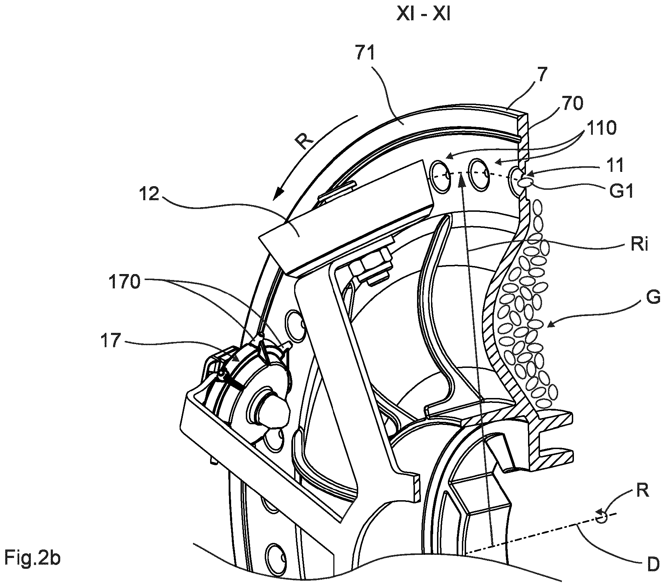

Weiterhin weist das Vereinzelungselement 7 mehrere in regelmäßigen Abständen zueinander angeordnete und zur Mitnahme wenigstens eines Korns des im Gehäuse 6 bereitgestellten körnigen Materials G geeignete Kornaufnahmeausnehmungen 11 auf, wie sie in der Fig.2a bis Fig.3 gezeigt sind. Die Kornaufnahmeausnehmungen 11 sind hierbei entlang eines Durchmessers bzw. einem Radius Ri ausgehend von einer Drehachse D im Bereich eines äußeren Scheibenumfangs angeordnet. Alternativ hierzu ist auch denkbar, dass die Kornaufnahmeausnehmungen 11 auf dem Umfang des Vereinzelungselements 7 angeordnet sind. Der erste Bereich und zweite Bereich des Gehäuses 6 sind über die durchgangslochartig ausgebildeten Kornaufnahmeausnehmungen 11 räumlich miteinander verbunden. Wie in der Fig.2b zu sehen ist, sind die einzelnen Körner G1 des körnigen Materials G aufgrund der Druckdifferenz, insbesondere einer daraus resultierenden Saugwirkung, zwischen den beiden Bereichen innerhalb der Kornaufnahmeausnehmungen 11 mitnehmbar.

Die einzelnen Körner G1 werden hierbei auf einer Vorderseite 70 des Vereinzelungselements 7 in einer Rotationsrichtung R zu einem Abdeckelement 12 transportiert. Das Abdeckelement 12 ist dabei auf einer der Rückseite 71 des Vereinzelungselements 7 zugewandten Seite angeordnet. Das Abdeckelement 12 ist ferner dazu eingerichtet, die Druckdifferenz, insbesondere lokal im Bereich des Abdeckelements 12, durch zumindest teilweises Abdecken wenigstens einer Kornaufnahmeausnehmung 11 temporär zu unterbinden. Aufgrund der unterbunden Druckdifferenz wird so, dass wenigstens eine vom Vereinzelungselement 7 mitgenommene Korn G1 im Bereich des Abdeckelements 12 zum Ablösen freigegeben. Somit wird das durch das Abdeckelement 12 freigegeben Korn G1 an einer definierten Position einer Saatgutablageeinrichtung 13 übergeben. Die Saatgutablageeinrichtung 13 umfasst als Scheibenschare ausgebildete Furchenöffnungselemente 14, Tiefenführungselemente 15 sowie Vorrichtungen 16 zum Schließen einer Furche.

Weiterhin ist innerhalb des Gehäuses 6 zumindest ein von dem wenigstens einen Vereinzelungselement 7 antreibbares Auswurforgan 17 mit mehreren, insbesondere am Umfang verteilten, Auswerfelementen 170 angeordnet. Das Auswurforgan 17 ist auf der Rückseite 71 des Vereinzelungselements 7 und in Rotationsrichtung R hinter dem Abdeckelement 12 angeordnet. Des Weiteren ist das Auswurforgan 17 mittels der Auswerfelementen 170 dazu eingerichtet, zumindest teilweise in die Kornaufnahmeausnehmungen 11 einzugreifen und somit die Kornaufnahmeausnehmungen 11 von Verstopfungen und/oder Verschmutzungen zu reinigen. Fest sitzende Verschmutzungen, Körner G1 oder sonstige Ablagerungen innerhalb der Kornaufnahmeausnehmungen 11 werden dabei durch ein Herausdrücken mit den Auswerfelementen 170 gelöst.

Um das Auswurforgan 17 auch zwischen den zueinander beabstandeten Kornaufnahmeausnehmungen 11 über das Vereinzelungselement 7 anzutreiben, sind zwischen den Kornaufnahmeausnehmungen 11 mit den Auswerfelementen 170 in Eingriff bringbare Antriebssenken 110 am Vereinzelungselement 7 ausgebildet. Je nach der benötigten Aussaatstärke des körnigen Materials G, insbesondere den geforderten Abständen entlang der landwirtschaftlichen Nutzfläche, kann zumindest eine Antriebssenke 110 für große Aussaatstärken oder mehrere Antriebssenken 110 für kleine Aussaatstärken zwischen zumindest jeweils zwei voneinander beabstandeten Kornaufnahmeausnehmungen 11 angeordnet sein.

Die Antriebssenken 110 und die Kornaufnahmeausnehmungen 11 sind dabei im regelmäßigen Abstand zueinander und entlang eines gemeinsamen Durchmessers bzw. des Radius Ri angeordnet. Der Abstand der Antriebssenken 110 zueinander und zu den jeweiligen benachbarten Kornaufnahmeausnehmungen 11 entspricht zumindest nahezu einer Teilung der Auswerfelemente 170 auf dem Auswurforgan 17. Somit kann das Auswurforgan 17 während des Betriebs mittels der Auswerfelemente 170 alternierend in die Antriebssenken 110 und Kornaufnahmeausnehmungen 11 eingreifen.

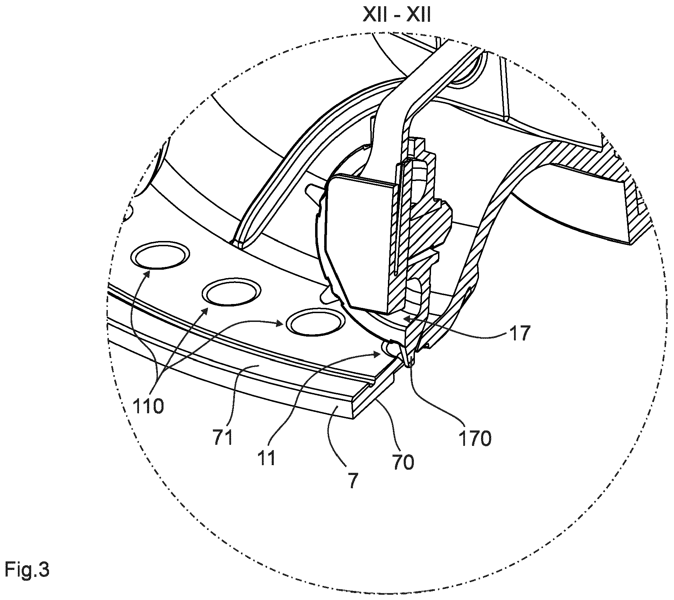

Wie in der Fig.3 zu sehen ist, entsprechen die Abmessungen der Antriebssenken 110 zumindest im Wesentlichen denen der Kornaufnahmeausnehmungen 11, wobei die Antriebssenken 110 als Sacklöcher ausgebildet sind und das Vereinzelungselement 7 nicht durchbrechen. Alternativ dazu können die Antriebssenken 110 auch als Durchgangslöcher ausgebildet sein, wobei die Größe des Lochs dabei, insbesondere um ein Vielfaches, kleiner ist als das der Kornaufnahmeausnehmungen 11. Somit ist ein Einfluss der Antriebssenken 110 auf die Druckdifferenz innerhalb des Gehäuses 6 zumindest nahezu ausgeschlossen.

Weiterhin ist zu sehen, dass die Antriebssenken 110, insbesondere ausgehend von der Rückseite 71 des Vereinzelungselements 7, zumindest teilweise kegelförmig, insbesondere kegelstumpfförmig, ausgebildet sind. Die Tiefe der Antriebssenken 110 übersteigt dabei zumindest im Wesentlichen eine Länge eines eingreifenden Teils bzw. Abschnitts der Auswerfelemente 170. Somit wird der Antrieb, insbesondere eine Kraft, zumindest nahezu ausschließlich über die Seiten- bzw. Kegelflächen der Antriebssenken 110 von dem Vereinzelungselement 7 auf die Auswerfelemente 170 und damit auf das Auswurforgan 17 übertragen. Alternativ dazu kann die Tiefe auch korrespondierend und/oder zumindest nahezu gleich zu der Länge des eingreifenden Teils bzw. Abschnitts der Auswerfelemente 170 ausgebildet sein.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 1: Tragelement
- 2: Säaggregat
- 3: Vorratsbehälter
- 4: Auslauföffnung
- 5: Vereinzelungsvorrichtung
- 6: Gehäuse
- 7: Vereinzelungselement
- 70: Vorderseite des Vereinzelungselements
- 71: Rückseite des Vereinzelungselements
- 8: Druckluftleitung
- 11: Kornaufnahmeausnehmungen
- 110: Antriebssenke
- 12: Abdeckelement
- 13: Saatgutablageeinrichtung
- 14: Furchenöffnungselemente
- 15: Tiefenführungselemente
- 16: Vorrichtungen zum Schließen einer Furche
- 17: Auswurforgan
- 170: Auswerfelement

- D: Drehachse
- F: Fahrtrichtung
- G: körniges Material
- G1: einzelnes Korn
- R: Rotationsrichtung
- Ri: Radius

## Patentansprüche

1. Landwirtschaftliche Vereinzelungsvorrichtung (5) zur Vereinzelung von körnigem Material, insbesondere Saatgut und/oder Dünger, umfassend,
- zumindest ein Gehäuse (6) zur Bereitstellung des körnigen Materials (G),
- zumindest ein innerhalb des Gehäuses (6) rotatorisch antreibbares, insbesondere zumindest teilweise rotationssymmetrisch ausgebildetes, Vereinzelungselement (7) mit mehreren in regelmäßigen Abständen zueinander angeordneten und zur Mitnahme wenigstens eines Korns (G1) des körnigen Materials (G) geeigneten durchgangslochartigen Kornaufnahmeausnehmungen (11), und
- zumindest ein innerhalb des Gehäuses (6) angeordnetes und von dem wenigstens einen Vereinzelungselement (7) antreibbares Auswurforgan (17) mit mehreren, insbesondere am Umfang verteilten, Auswerfelementen (170), welche zur Reinigung verstopfter und/oder verschmutzter Kornaufnahmeausnehmungen (11) dazu geeignet sind, zumindest teilweise in die Kornaufnahmeausnehmungen (11) einzugreifen,
**dadurch gekennzeichnet, dass** zum zumindest teilweisen Antrieb des wenigstens einen Auswurforgans (17), zwischen zumindest jeweils zwei voneinander beabstandeten Kornaufnahmeausnehmungen (11), wenigstens eine mit den Auswerfelementen (170) in Eingriff bringbare Antriebssenke (110) am Vereinzelungselement (7) als Sackloch oder nach Art einer Stufe und/oder Kante ausgebildet ist, wobei die Kornaufnahmeausnehmungen (11) und die Antriebssenken (110) zumindest teilweise konzentrisch entlang eines gemeinsamen Durchmessers bzw. Radius (Ri) zu einer Drehachse (D) des Vereinzelungselements (7) angeordnet sind.

2. Vereinzelungsvorrichtung (5) nach Anspruch 1, **dadurch gekennzeichnet, dass**
der Abstand der wenigstens einen Antriebssenke (110) zu wenigstens einer weiteren Antriebssenke (110) und/oder wenigstens einer Kornaufnahmeausnehmungen (11) zumindest nahezu einer Teilung der Auswerfelemente (170) des zumindest einen Auswurforgans (17) entspricht.

3. Vereinzelungsvorrichtung (5) nach zumindest einem der vorgenannten Ansprüche 1 und 2, **dadurch gekennzeichnet, dass** das wenigstens eine Vereinzelungselement (7) zumindest teilweise als kreisförmige Scheibe ausgebildet ist, wobei die Kornaufnahmeausnehmungen (11) und die zumindest eine Antriebssenke (110) zumindest im Bereich eines äußeren Scheibenumfangs angeordnet sind.

4. Vereinzelungsvorrichtung (5) nach zumindest einem der vorgenannten Ansprüche 1 bis 3, **dadurch gekennzeichnet, dass** die Abmessungen der zumindest einen Antriebssenke (110) zumindest im Wesentlichen den Abmessungen der Kornaufnahmeausnehmungen (11) entsprechen.

5. Vereinzelungsvorrichtung (5) nach Anspruch 1, **dadurch gekennzeichnet, dass** die Tiefe der Antriebssenke (110) korrespondierend zu der Länge eines eingreifenden Teils des Auswerfelements (10) oder diese zumindest im Wesentlichen übersteigend ausgebildet.

6. Vereinzelungsvorrichtung (5) nach zumindest einem der vorgenannten Ansprüche 1 bis 5, **dadurch gekennzeichnet, dass** die zumindest eine Antriebssenke (110) zumindest teilweise kegelförmig, vorzugsweise kegelstumpfförmig, ausgebildet ist.

7. Vereinzelungsvorrichtung (5) nach zumindest einem der vorgenannten Ansprüche 1 bis 6, wobei das Gehäuse (6) mittels des zumindest einen Vereinzelungselements (7) in wenigstens einen ersten Bereich und einen zweiten Bereich derartig unterteilt ist, dass zwischen dem wenigstens einen ersten und zweiten Bereich eine Druckdifferenz erzeugbar ist, und wobei die Kornaufnahmeausnehmungen (11) durchgangslochartig ausgebildet sind und der wenigstens eine erste und zweite Bereich über die Kornaufnahmeausnehmungen (11) räumlich miteinander verbunden sind, und die einzelnen Körnern (G1) aufgrund der Druckdifferenz zumindest teilweise innerhalb der Kornaufnahmeausnehmung (11) mitnehmbar sind, wobei vorzugsweise in einer Rotationsrichtung (R) des Vereinzelungselements (7) vor dem Auswerfelement (170) zumindest ein Abdeckelement (12) angeordnet ist, welches vorzugsweise dazu eingerichtet ist, die Druckdifferenz, insbesondere lokal im Bereich des zumindest einen Abdeckelements (12), durch zumindest teilweises Abdecken wenigstens einer Kornaufnahmeausnehmung (11) temporär zu unterbinden und das wenigstens eine Korn aus der wenigstens einen Kornaufnahmeausnehmung (11) zum Ablösen freizugeben.

8. Sämaschine, insbesondere Einzelkornsämaschine, mit zumindest einer Vereinzelungsvorrichtung (5), vorzugsweise mehreren Vereinzelungsvorrichtungen (5), zum Vereinzeln von körnigem Material (G), insbesondere Saatgut und/oder Dünger, **dadurch gekennzeichnet, dass** zumindest eine Vereinzelungsvorrichtung (5) nach zumindest einem der vorgenannten Ansprüche 1 bis 7 ausgebildet ist.

## Claims

1. Agricultural singling device (5) for singling granular material, in particular seed and/or fertilizer, comprising,
- at least one housing (6) for providing the granular material (G),
- at least one singling element (7), which can be rotationally driven within the housing (6) and is in particular at least partially rotationally symmetrical, and which comprises a plurality of through-hole-like grain-receiving cut-outs (11) arranged at regular distances from one another and suitable for carrying at least one grain (G1) of the granular material (G), and
- at least one ejection member (17) which is arranged within the housing (6) and can be driven by the at least one singling element (7), said ejection member having a plurality of ejection elements (170) distributed in particular around the circumference, which are suitable for at least partially engaging in the grain-receiving cut-outs (11) for cleaning blocked and/or dirty grain-receiving cut-outs (11),
**characterized in that,** for at least partially driving the at least one ejection member (17), at least one drive recess (110) is formed in the singling element (7) between at least two spaced-apart grain-receiving cut-outs (11), which drive recess can be brought into engagement with the ejection elements (170) and is formed as a blind hole or in the manner of a step and/or edge, the grain-receiving cut-outs (11) and the drive recesses (110) being arranged at least partially concentrically along a common diameter or radius (Ri) relative to a rotation axis (D) of the singling element (7).

2. Singling device (5) according to claim 1, **characterized in that**
the distance between the at least one drive recess (110) and at least one further drive recess (110) and/or at least one grain-receiving cut-out (11) at least almost corresponds to a spacing of the ejection elements (170) of the at least one ejection member (17).

3. Singling device (5) according to at least one of the preceding claims 1 and 2, **characterized in that** the at least one singling element (7) is at least partially in the form of a circular disk, the grain-receiving cut-outs (11) and the at least one drive recess (110) being arranged at least in the region of an outer disc circumference.

4. Singling device (5) according to at least one of the preceding claims 1 to 3, **characterized in that** the dimensions of the at least one drive recess (110) correspond at least substantially to the dimensions of the grain-receiving cut-outs (11).

5. Singling device (5) according to claim 1, **characterized in that** the depth of the drive recess (110) is designed to correspond to the length of an engaging part of the ejection element (10) or at least substantially exceed it.

6. Singling device (5) according to at least one of the preceding claims 1 to 5, **characterized in that** the at least one drive recess (110) is at least partially conical, preferably frustoconical.

7. Singling device (5) according to at least one of the preceding claims 1 to 6, wherein the housing (6) is divided by means of the at least one singling element (7) into at least one first region and one second region in such a way that a pressure difference can be generated between the at least one first and second region, and wherein the grain-receiving cut-outs (11) are through-hole-like and the at least one first and second region are spatially connected to one another via the grain-receiving cut-outs (11), and the individual grains (G1) can be carried along at least partially within the grain-receiving cut-out (11) due to the pressure difference, wherein, preferably in a direction of rotation (R) of the singling element (7), at least one cover element (12) is arranged upstream of the ejection element (170) and is preferably designed to temporarily prevent the pressure difference, in particular locally in the region of the at least one cover element (12), by at least partially covering at least one grain-receiving cut-out (11), and to release the at least one grain from the at least one grain-receiving cut-out (11) in order to discharge it.

8. Seed drill, in particular precision seed drill, comprising at least one singling device (5), preferably a plurality of singling devices (5), for singling granular material (G), in particular seed and/or fertilizer, **characterized in that** at least one singling device (5) is designed according to at least one of the preceding claims 1 to 7.

## Revendications

1. Dispositif de séparation (5) agricole pour la séparation de matériau granulaire, en particulier de semences et/ou d'engrais, comprenant
- au moins un boîtier (6) pour la mise à disposition du matériau granulaire (G),
- au moins un élément de séparation (7) pouvant être entraîné en rotation à l'intérieur du boîtier (6), en particulier réalisé au moins partiellement à symétrie de révolution, comportant plusieurs évidements (11) de réception de grain en forme de trous de passage disposés à intervalles réguliers les uns par rapport aux autres et appropriés pour entraîner au moins un grain (G1) du matériau granulaire (G) et
- au moins un organe d'éjection (17) disposé à l'intérieur du boîtier (6) et pouvant être entraîné par l'au moins un élément de séparation (7), comportant plusieurs éléments d'éjection (170), en particulier répartis sur la périphérie, qui sont appropriés, pour le nettoyage d'évidements (11) de réception de grain bouchés et/ou encrassés, pour s'insérer au moins partiellement dans les évidements (11) de réception de grain,
**caractérisé en ce que,** pour l'entraînement au moins partiel de l'au moins un organe d'éjection (17), entre au moins respectivement deux évidements (11) de réception de grain écartés l'un de l'autre, au moins un creux d'entraînement (110) pouvant venir en prise avec les éléments d'éjection (170) est réalisé sur l'élément de séparation (7) sous forme de trou borgne ou à la manière d'un gradin et/ou d'une arête, les évidements (11) de réception de grain et les creux d'entraînement (110) étant disposés au moins partiellement de manière concentrique, le long d'un diamètre ou, selon le cas, d'un rayon (Ri) commun, par rapport à un axe de rotation (D) de l'élément de séparation (7).

2. Dispositif de séparation (5) selon la revendication 1, **caractérisé en ce que** la distance entre l'au moins un creux d'entraînement (110) et au moins un autre creux d'entraînement (110) et/ou au moins un évidement (11) de réception de grain correspond au moins pratiquement à une division des éléments d'éjection (170) de l'au moins un organe d'éjection (17).

3. Dispositif de séparation (5) selon au moins l'une des revendications 1 et 2 susmentionnées, **caractérisé en ce que** l'au moins un élément de séparation (7) est réalisé au moins partiellement sous la forme d'un disque circulaire, les évidements (11) de réception de grain et l'au moins un creux d'entraînement (110) étant disposés au moins dans la zone d'une périphérie extérieure du disque.

4. Dispositif de séparation (5) selon au moins l'une des revendications 1 à 3 susmentionnées, **caractérisé en ce que** les dimensions de l'au moins un creux d'entraînement (110) correspondent au moins sensiblement aux dimensions des évidements (11) de réception de grain.

5. Dispositif de séparation (5) selon la revendication 1, **caractérisé en ce que** la profondeur du creux d'entraînement (110) est réalisée de manière à correspondre à la longueur d'une partie d'insertion de l'élément d'éjection (10) ou la dépasse au moins sensiblement.

6. Dispositif de séparation (5) selon au moins l'une des revendications 1 à 5 susmentionnées, **caractérisé en ce que** l'au moins un creux d'entraînement (110) est réalisé au moins partiellement en forme conique, de préférence en forme tronconique.

7. Dispositif de séparation (5) selon au moins l'une des revendications 1 à 6 susmentionnées, le boîtier (6) étant divisé au moyen de l'au moins un élément de séparation (7) en au moins une première zone et une seconde zone de telle sorte qu'une différence de pression peut être générée entre l'au moins une première et seconde zone et les évidements (11) de réception de grain étant réalisés à la manière de trous de passage et l'au moins une première et seconde zone étant reliées spatialement l'une à l'autre par l'intermédiaire des évidements (11) de réception de grain et les grains (G1) individuels pouvant être entraînés au moins partiellement à l'intérieur de l'évidement (11) de réception de grain en raison de la différence de pression, au moins un élément de recouvrement (12) étant de préférence disposé avant, dans un sens de rotation (R) de l'élément de séparation (7), l'élément d'éjection (170), lequel élément de recouvrement est de préférence conçu pour empêcher temporairement la différence de pression, en particulier localement dans la zone de l'au moins un élément de recouvrement (12), en recouvrant au moins partiellement au moins un évidement (11) de réception de grain et pour libérer, en le détachant, l'au moins un grain de l'au moins un évidement (11) de réception de grain.

8. Semoir, en particulier semoir monograine, comportant au moins un dispositif de séparation (5), de préférence plusieurs dispositifs de séparation (5), pour la séparation de matériau granulaire (G), en particulier des semences et/ou des engrais, **caractérisé en ce qu'**au moins un dispositif de séparation (5) est réalisé selon au moins l'une des revendications 1 à 7 susmentionnées.
